# EUROPEAN PATENT SPECIFICATION

(11) **EP 2 204 318 B1**
(45) Date of publication and mention of the grant of the patent: **27.04.2011**
(21) Application number: 09425479.4
(22) Date of filing: 24.11.2009
(51) Int. Cl.: B64C 27/18, B64C 39/02

(54) **Air jet driven rotor helicopter adapted to be attached to a pilot**
An einem Piloten befestigbarer Hubschrauber mit einem Rotor mit Luftstrahlantrieb
Hélicoptère individuel avec un rotor à propulsion de jet d'air

(30) Priority: 25.11.2008 IT RM20080624
(43) Date of publication of application: 07.07.2010
(73) Proprietor: Martini, Edoardo, 00043 Ciampino (RM) (IT); Martini, Sara, 00043 Ciampino (RM) (IT)
(72) Inventor: Martini, Edoardo, 00043 Ciampino (RM) (IT); Martini, Sara, 00043 Ciampino (RM) (IT)

(56) References cited:
- EP-A2- 0 150 812
- DE-A1- 19 547 749
- DE-C- 673 964
- US-A- 2 461 347
- US-A- 3 189 302
- US-A- 4 371 314
- US-A- 5 641 269

## Description

The present invention relates to an air jet driven rotor helicopter adapted to be attached to a pilot.

DE 673964, filed on 12 February 1938 by Adolf Weissenburger and entitled "Am Menschenkörper befestigter Hubschrauber", discloses a carrying structure fixed to a back, on which an endothermic engine is mounted whose shaft moves a main propeller over the pilot's head and an horizontal axis auxiliary propeller at the back of the pilot. There is a directional rudder that is controlled through cables by the pilot's feet.

US 2,461,347, filed on 17 October 1945 by Horace T. Pentecost and entitled "Helicopter adapted to be attached to a pilot", discloses a carrying structure fixed to a back, on which an endothermic engine is mounted whose shaft moves a couple of coaxial lifting rotors over the pilot's head and means for varying the pitch of the rotor blades.

Also FR 1.331.306, filed on 26 February 1957 by M. Georges Albert Sablier and entitled "Hélicoptèr individuel", discloses a carrying structure fixed to a back, on which an endothermic engine is mounted whose shaft moves through gears a couple of coaxial lifting rotors over the pilot's head. This for approaching the centre of rotation of the assembly of the machine mounted to the centre of the application of the sustaining force of the blades, and obtaining a great stability and a maximum of manoeuvrability.

US 3,273,824, filed on 4 February 1965 by W.K. Owens and entitled "Single passenger aircraft" discloses a carrying structure with a seat and belts and an endothermic engine mounted over the pilot's head whose shaft moves a rotor. Control elements in the form of adjustable fins are laterally to the pilot.

US 5641269, filed on 24 June 1997 by John Eller and entitled "Helicopter rotor seal assembly " discloses a rotor seal for gas operated helicopters in which the rotor rotates by compressed air jets from nozzles made in the ends of the rotor blades and directed rearward with respect to the direction of rotation thereof.

From above it can be noticed that apparatus for the individual flight in the form of helicopter already exist but all of them have a mechanic operation, problems of positioning the centre of the thrust with respect to the centre of gravity and not at the best solutions for the directional control.

Helicopters are also known whose rotor is moved by air jets exiting from the blade ends as disclosed in US 5641269, but it is easily understood that a rotor hub of that kind is not suitable to a helicopter for the individual flight where it is necessary to maximally reduce the distance of the application point of the rotor sustaining thrust from the centre of gravity of the helicopter. This reduction does not require great efforts on the commands by the pilot.Further other references are cited in this document as :EP 0 150 812 A2, US 4 371 314 A and DE 195 47 749 A1.

Therefore, an object of the present invention is to manufacture an helicopter for the individual flight in which the carrying structure permits to approach as much as possible the centre of gravity of the pilot and helicopter assembly to the point of application of the sustaining thrust.

Another object is to allow the employment of the known system of the air jet rotor from the ends of the blades to a helicopter for the individual flight.

Jet another object of the invention is to make a direction control for a helicopter for the individual flight not bulky and poorly efficient as in the prior art documents.

In order to achieve the above objects, the present invention provides an air jet driven rotor helicopter adapted to be attached to a pilot, comprising a carrying structure designed to be fixed by belts on the shoulders of a pilot, the structure carrying at its rear end an engine-compressor unit and at its upper end a rotor hub with a plurality of blades that are provided with a respective longitudinal channel, the engine-compressor unit delivering through a delivery main duct compressed air inside the blades from ends of which the air exits rearward with respect to the direction of rotation of the blades, the carrying structure having an upper portion projecting forward that sustains adjustably a distributor constituted by two mutually movable parts, the one being a lower fixed part, the other being an upper rotating part sealed to each other, the fixed lower part being connected to the delivery main duct of the engine-compressor unit, and the upper rotating part being provided with a plurality of holes in connection with the longitudinal channels of the plurality of rotor blades through respective fittings.

Advantageously, the distributor is mounted on a torque bar fixed on a universal joint arrangement on the upper portion of the carrying structure and connected by a lever to control means.

Suitably the torque bar is positioned in an adjustable manner in the forward-rearward direction on the upper portion of the carrying structure.

Further, the helicopter according to the invention has a directional control comprising a central duct that is connected to the delivery main duct and is faced rearward with respect to the shoulders of the pilot, duct that is provided with a T-shaped terminal toward right hand and left hand that is closed in the two ends with hollow ball valves controllable alternatively for creating a pressured air jet toward right hand and left hand.

Such a constructive configuration does not require a tail rotor, permits save of weight and make easy the construction with an advantage for the operation reliability and, therefore, of the flight. Further, the maintenance and service costs are extremely low. In addition the employment of a modem aeronautic two-stroke engine allows reduced fuel consumption and, therefore, low operating costs.

The invention will be further described in detail in one preferred embodiment thereof, with reference to the accompanying drawings, in which:
figure 1 represents in a reduced scale a side view of a helicopter according to the invention with a pilot;

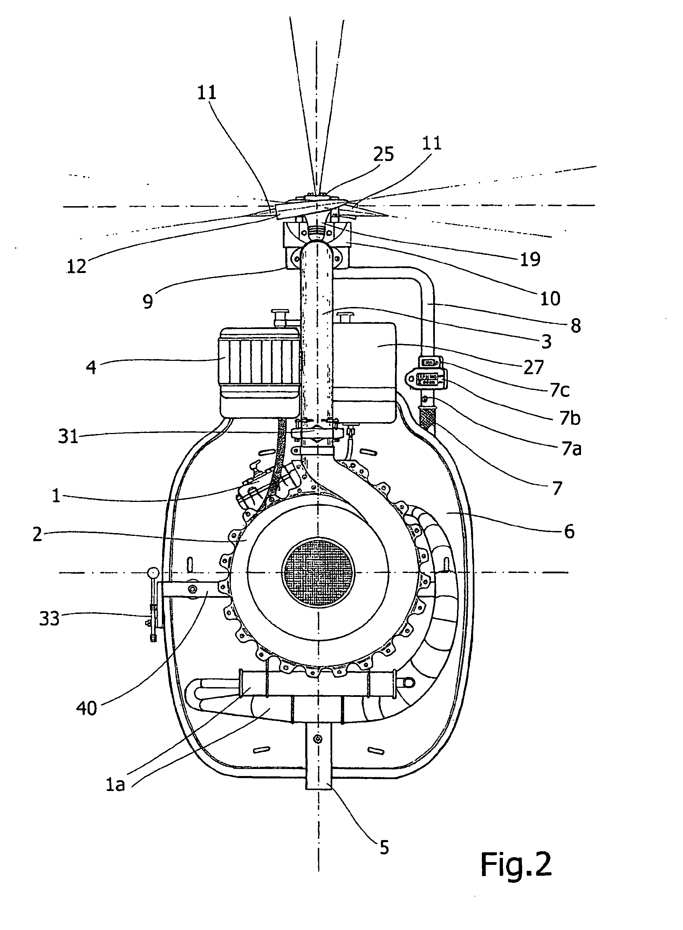

figure 2 is a rear view of the helicopter in figure 1 without a pilot;

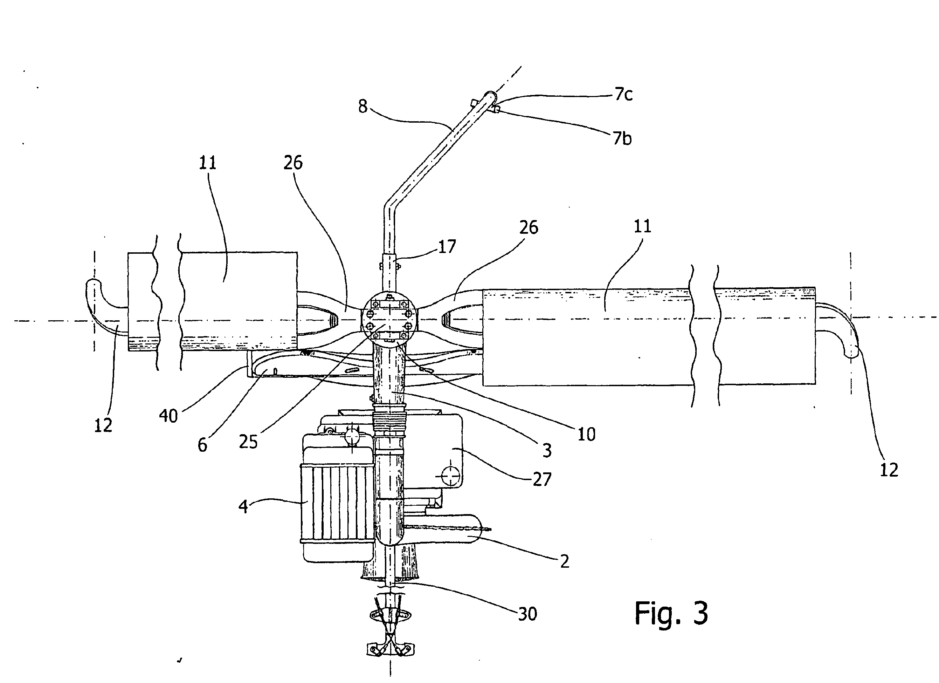

figure 3 is a partially cut, top plan view, of the helicopter in figure 1 without a pilot;
figure 4 is a partially cut view of a directional control device of the helicopter in figure 1;
figure 5 is a partial plan view of the directional control device in figure 4;
figure 6 is a side half view and a partially cross-sectioned half view of the distributor of the helicopter according to the invention; and
figure 7 is a partial isometric perspective view of a rotor blade with a nozzle of the helicopter according to the invention.

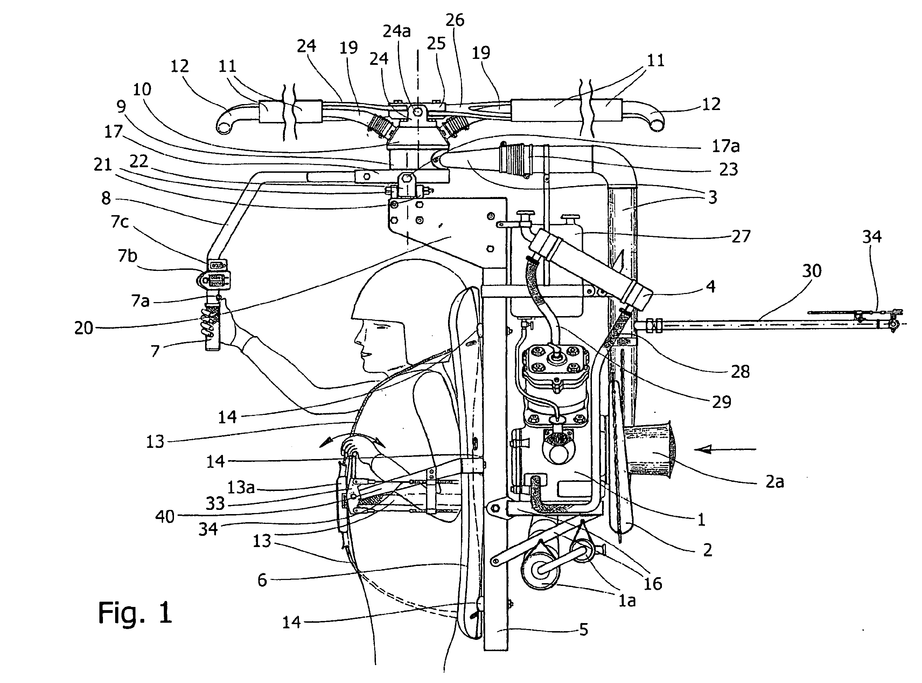

With reference to figure 1, that is a side view of the helicopter according to the invention, a carbon fibre padded back 6 with six adjustable safety belts 13 enables the pilot to securely fasten the helicopter to his shoulder. The free end of the safety belts 13 can be attached to a buckle 13a positioned on the pilot's chest. Fastened to the padded back 6 is an aluminium alloy tubular strut 5, by means of bolts and vibration-dumping rubber buffers 14. The tubular strut 5 is a part of a carrying structure of the helicopter. The carrying structure further comprises a mount 16 connected by two bolts with vibration-dumping buffers to an engine 1, preferably an aeronautic two-stroke engine. Directly keyed on the shaft of the engine 1 is a centrifugal compressor with respective diffuser and volute casing assembly, indicated as 2 in the drawing. Connected to the volute casing is a compressed air delivery main duct 3 that, after a 90 degrees elbow and a short hose 23 is inserted in a lower fixed part 9 of a distributor 9-10 comprising also a rotating upper part 10 being airtight with respect to the lower fixed part 9.

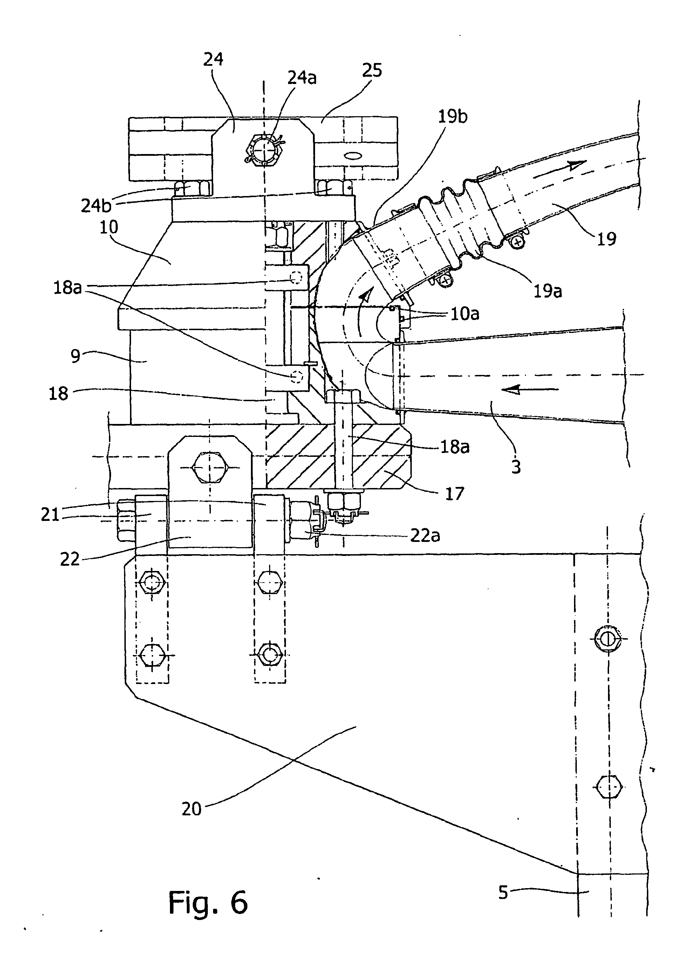

As shown in detail in figure 6 that is an enlarged scale side half and partially cross-sectioned half view of the distributor, the distributor lower part 9 is assured by two bolts 18a to a torque bar 17 being connected to a command level 8 that is provided with control and adjusting means such as a throttle control gas handle 7, a starter button 7a, an engine rpm and temperature instrument panel 7b, a rotor rpm small instrument panel 7c, as described below for explaining the helicopter operation. The upper rotating part 10 is mounted on the lower fixed part 9 by means of a shaft 18 and respective bearings 18b.

The task of the flexible duct 23 is for helping the slight movements of the part 9 which is connected to, due to the small rotations of the torque bar 17, as determined by the pilot manoeuvring the command level 8. Further, the hose 23 is useful for balancing the pilot and helicopter centre of gravity by displacing the supports 21 both forward and rearward on two head plates 20 as a forward projecting upper part of the structure. This embodiment prevents the pilot from moving part of his body for centring and manoeuvring. The geometry of the distributor (9-10)has been designed in order to reduce as much as possible the total height of the helicopter. This results in a shorter distance between the point of application of the rotor vertical trust and the centre of gravity of the helicopter. Therefore, the pilot, while manoeuvring, will perform lower efforts on the command level 8 and thus on the torque bar 17.

For the same purpose, the two bearings 18b situated on the shaft 18 have been embodied inside the distributor 9-10 that is internally hollow with aerodynamic surfaces. Compressed air arrives to the lower fixed part 9 rigidly supporting the shaft 18 from the diffuser and volute casing assembly 2 through the main duct 3 and the hose 23. The compressed air exits the distributor upper rotating part 10 on whose external surfaces there are fixed flanges 19b being inclined at 60 degrees with respect to the vertical axis for the connection by hoses 19a to the fitting 19 conveying the air to rotor blades 11.

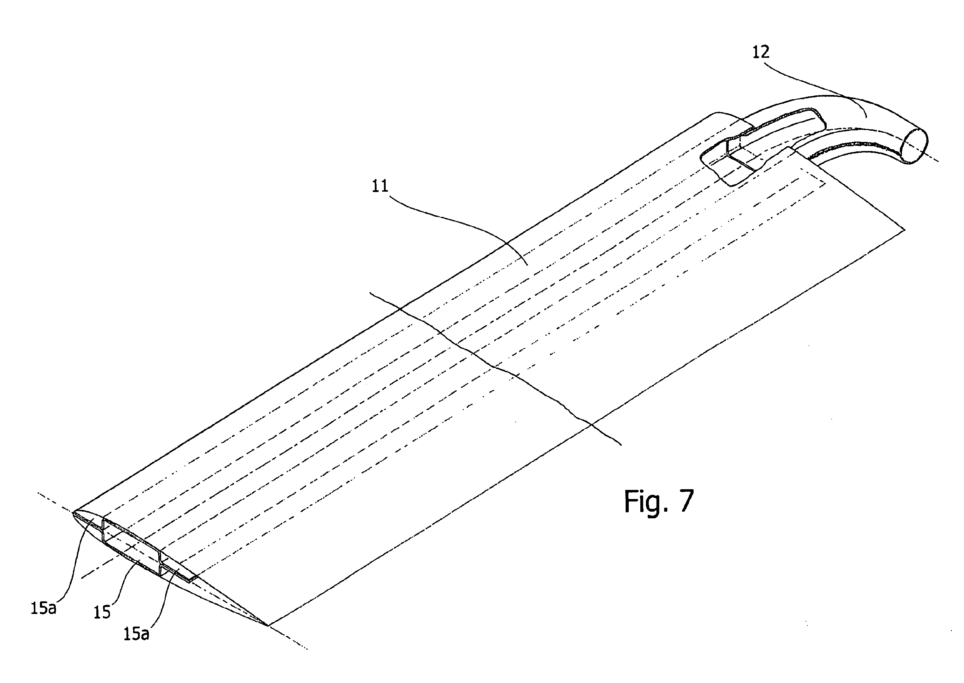

Thus, the compressed air arriving from the lower fixed part 9 passes to the upper rotating part 10 of the distributor and then through the hoses 19a and the conveying fittings 19, is canalised in channels created by box-shaped longitudinal members 15 that constitute the frameworks of the rotor blades 11, as shown in figure 7 that is a partial isometric perspective view of the same rotor blades. The air exits nozzles12 situated at the ends of the rotor blades 11. The air is expanded in the nozzles 12 to atmospheric pressure, gaining the maximum exhaust velocity and thus maximum thrust of rotation. It should be appreciated that, due to the total compression effect, the hot air flowing in the box-shaped longitudinal member 15 also does a useful anti-ice task.

As above said, bolted at the top of the tubular strut 5 are the two head plates 20 that by means of the two vertical supports 21 constitute the carrying structure of the distributor 9-10 and of the assembly of rotor blades 11, which are sustained by tie rods 26 to a rotor hub 25. Inserted by a bolt 22a between the two vertical supports 21 is a swinging fork 22, on the top of which the torque bar 17 is hinged by the bolt 17a for tilting the rotor. Fastened on the top of the upper rotating part 10 by four bolts are two vertical supports 24 and a rotating bolt 24a that allows the rotor hub 25 to slightly swing. Two seats for fixing the tie rods 26 are formed at the ends of the rotor hub 25. The fixing seats are milled inclined for giving the blades the correct angle of attack. This solution has been chosen to facilitate the construction of the helicopter. The tie rods 26 are connected on one side to the rotor hub 25 and on the other side to bent stiffening fins 15a of the box-shaped longitudinal members (figure 7) of the rotor blades. The box-shaped longitudinal members 15 are made from two hats with fins along which they are joint. Housed and laterally fastened between the tubular strut 5 and the main duct 3 is an engine fuel tank 27 in a position higher than the engine carburettor. An engine refrigerant cooler 4 is fixed in the same way and in a tilted position in order to better exploit the air flow of the rotor for the cooling. Connected to the cooler 4 are two delivery and return hoses 28, 29 for the refrigerant. Connected to the engine mount 16 is an exhaust muffler 1a.

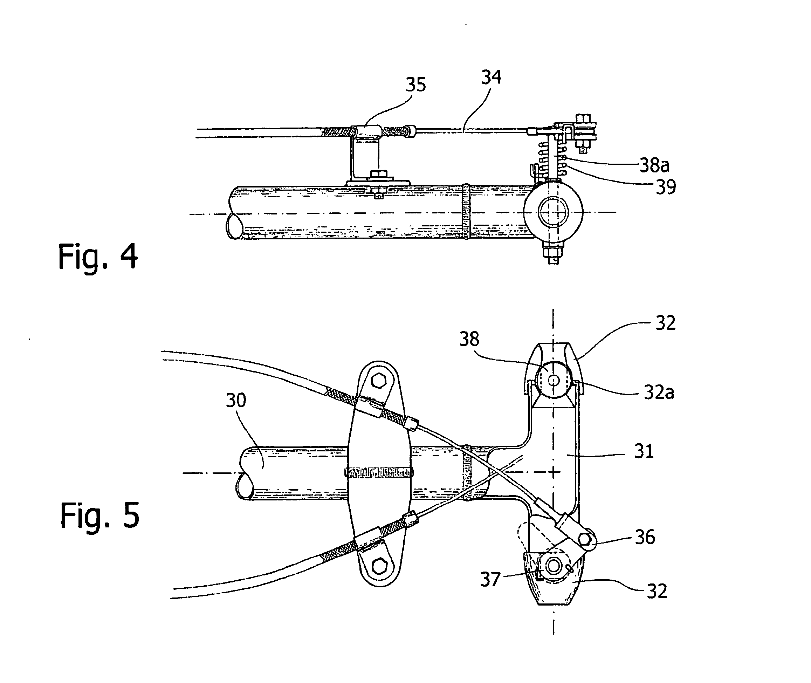

The helicopter according to the invention misses the tail rotor that in the conventional helicopters allows also the rotation of the whole airframe about the vertical axis in hovering condition. In order to overcome a lack in the manoeuvring a directional control is used according to the invention that is comprised in general of a short duct 30 connected to the main duct 3 and ending with a T-shaped terminal whose ends are provided with two reaction nozzles 32, as shown in an enlarged scale in the side and plan views of figures 4 and 5. Positioned on each of the nozzles 32 is a valve formed by a bored ball 38 integral to a pin 38a pivoting by an operation lever 37 that is controlled by a fork 36 and a Bowden cable 34 by means of a command lever 33 sustained by a support 40.

When the pilot is in hovering and wants to make a rotation about the vertical axis, he operates on the command lever 33 moving it forward or rearward. In so doing the pilot pulls one of the two Bowden cables 34 being connected to the respective forks 36 and operation levers 37. By operating the lever 37 the bored ball 38 is caused to rotate and position its bore (without reference numeral in the drawings) in the nozzle 32, thereby allowing a flow of compressed air either on the right hand or on the left hand according to the pilot's command. The alignment of the bore of the ball 38 with the exit is counteracted by a return spring 39 so that the bore is positioned always at 90 degrees to the axis of the nozzle, i.e. in a closer position, preventing the air to flow. The seal of the ball is assured by an O-ring 32a.

The operation of the helicopter is as follows. When the pilot presses the starter button 7a starts the engine 1. The engine rpm and the temperature of the refrigerant are displayed on the instrument panel 7b and allow the pilot to check the correct operation of the engine. The small instrument panel 7c displays the rotor rpm by a magnetic rotation sensor positioned inside of the lower fixed part of the distributor. By rotating the gas handle 7 the pilot accelerates increasing thereby the rpm. The air flows from the volute casing of the assembly 2, passes to the delivery main duct 3 and then to the distributor 9-10. The two distributor parts 9, 10 are sealed by two O-rings 10a. After through the conveying fittings 19 and the hoses 19a the compressed air arrives to the box shaped blade longitudinal members 15 and then to the nozzles 12 so that the rotor blades 11 rotate. By increasing more the rpm of the engine-compressor unit, optimal air pressure and flow rate are reached, so that the rotor after reaching the requested design pneumatic power and having the blades 11 with a fixed angle of attack, will develop a least thrust so that the pilot wearing the helicopter takes off generally in a vertical direction.

On the contrary, by decreasing the rpm, the pneumatic power transmitted decreases, thereby the helicopter descends slowly. Differently from other small helicopters by using the directional nozzles, the pilot can do perfectly complete rotations about the vertical axis of the helicopter, both in flying and in hovering but also above all in the very first phase of the take off. The pilot, operates on the directional nozzles 32, as above said, for the rotation about the vertical axis, and he operates on the command lever 8, that is connected to the torque bar 17 for moving forward, rearward, on the right hand or on the left hand. As the torque bar 17 is connected to the distributor 9-10 and then to the rotor, the rotor is tilted sufficiently forward or rearward on the right hand or on the left hand, so that it generates a component of the supporting thrust that causes the helicopter to shift forward or rearward on the right hand or on the left hand.

## Claims

1. An air jet driven rotor helicopter adapted to be attached to a pilot, comprising a carrying structure (5-16-20) designed to be fixed by belts (13) on the shoulders of a pilot, the structure carrying at its rear end an engine-compressor unit (1-2) and at its upper end a rotor hub (25) with a plurality of blades (11) that are provided with a respective longitudinal channel, the engine-compressor unit (1-2) delivering through a delivery main duct (3) compressed air inside the blades (11) from ends of which the air exits rearward with respect to the direction of rotation of the blades (11), wherein the carrying structure (5-16-20) has an upper portion (20) projecting forward that sustains adjustably a distributor (9-10) constituted by two mutually movable parts, the one (9) being a lower fixed part, the other (10) being an upper rotating part, and sealed to each other, the fixed lower part (9) being connected to the delivery main duct (3) of the engine-compressor unit (1-2), and the upper rotating part (10) being provided with a plurality of holes in connection with the longitudinal channels of the plurality of rotor blades through respective fittings (19).

2. The helicopter according to claim 1 **characterised in that** the distributor (9-10) is fixed on a torque bar (17) mounted on a universal joint arrangement (17a-21-22-22a) on said upper portion (20) of the carrying structure and is connected by a command lever (8) to control means (7-7a-7b-7c).

3. The helicopter according to claim 2 **characterised in that** the torque bar (17) is positioned in an adjustable manner in the forward-rearward direction on the upper portion (20) of the carrying structure, for obtaining an optimal centring of the helicopter.

4. The helicopter according to claim 1 **characterised in that** the helicopter has a directional control comprising a central duct (30) that is connected to the delivery main duct (3) and is faced rearward with respect to the shoulders of the pilot, duct (30) that is provided with a T-shaped terminal (31) toward right hand and left hand that is closed in the two ends with hollow ball valves (38-38a) controllable alternatively for creating a pressured air jet toward right hand and left hand.

## Patentansprüche

1. Hubschrauber mit einem von Druckluftstrahlen betriebenen, einem Piloten umhängbaren Rotor, umfassend eine über Riemen (13) an die Schultern eines Piloten anschnallbare Trägerstruktur (5-16-20), wobei die Struktur hinten einen Motorkompressor (1-2) und oben eine Motornabe (25) mit einer Mehrzahl von mit entsprechend längslaufenden Leitungen versehenen Schaufeln (11) trägt und der Motorkompressor (1-2) über einen Hauptsammelkanal (3) dem Inneren der Schaufeln (11) Druckluft zuführt, aus deren Extremitäten die Luft gegenüber der Drehrichtung der Schaufeln (11) nach rückwärts ausströmt, in dem die Trägerstruktur (5-16-20) einen oberen, nach vom gerichteten Abschnitt (20) aufweist, der für die orientierbare Abstützung eines aus zwei einander gegenüber beweglichen Teilen bestehenden Verteilers (9-10) vorgesehen ist, und zwar ein unterer ortsfester Teil (9) und ein anderer oberer dem ersten gegenüber luftdicht drehbarer Teil (10), wobei der untere ortsfeste Teil (9) mit dem Hauptsammelkanal (3) der Motorkompressor-Druckseite (1-2) verbunden und der obere drehbare Teil (10) mit einer Mehrzahl von Verbindungslöchern versehen ist, die über entsprechende Anschlüsse (19) mit den längslaufenden Leitungen der Mehrzahl von Rotorschaufeln verbunden sind.

2. Hubschrauber gemäß Anspruch 1, **dadurch gekennzeichnet dass** der Verteiler (9-10) an einen Torsionsstab (17) befestigt ist, der über eine Kardangelenk-Vorrichtung (17a-21-22-22a) auf den genannten oberen Abschnitt (20) der Trägerstruktur montiert und über einen Hebel (8) mit Steuervorrichtungen (7-7a-7b-7c) verbunden ist.

3. Hubschrauber gemäß Anspruch 2, **dadurch gekennzeichnet dass** der Torsionsstab (17) auf dem oberen Abschnitt (20) der Trägerstruktur in einer nach vom und hinten einstellbaren Weise gelagert ist, um **dadurch** eine optimale Zentrierung der Hubschraubers zu erzielen.

4. Hubschrauber gemäß Anspruch 1, **dadurch gekennzeichnet dass** er über eine Richtungs-Kontrollvorrichtung verfügt, die eine an die Druckseite des Hauptsammelkanals (3) angeschlossene Zentralleitung (30) umfasst und den Schultern des Piloten gegenüber nach hinten gerichtet ist, wobei die Leitung (30) mit einer T-förmigen, nach rechts und links weisenden Abzweigung (31) versehen ist, die an ihren zwei Enden mit hohlen, abwechselnd steuerbaren Kugelventilen (38-38a) abgeschlossen ist, um einen nach rechts und links wirkenden Druckluftstrahl zu erzeugen.

## Revendications

1. Hélicoptère à rotor à jets d'air adapté à être attaché à un pilote, comprenant une structure portante (5-16-20) destinée à être fixée par des courroies (13) aux épaules d'un pilote, la structure supportant à l'arrière un motocompresseur (1-2) et sur le haut un moyeu rotor (25) avec une pluralité de pales (11) dotées d'un conduit longitudinal, le motocompresseur (1-2) envoyant moyennant un collecteur principal (3) d'admission de l'air sous pression à l'intérieur des pales (11), l'air sortant des extrémités vers l'arrière par rapport au sens de rotation des pales (11), où la structure portante (5-16-20) a une portion supérieure (20) tournée vers l'avant destinée à supporter de manière orientable un distributeur (9-10) constitué de deux parties en mouvement relatif, l'une (9) inférieure fixe, l'autre (10) supérieure tournante à étanchéité hermétique l'une à l'autre, la partie inférieure fixe (9) étant raccordée au collecteur principal (3) d'admission du motocompresseur (1-2), et la partie supérieure tournante (10) étant équipée d'une pluralité de trous raccordés aux conduits longitudinaux de la pluralité de pales du rotor moyennant les raccords respectifs (19).

2. Hélicoptère selon la revendication 1 **caractérisé par le fait que** le distributeur (9-10) est fixé sur une barre de torsion (17) montée sur un dispositif à joint de cardan (17a-21-22-22a) sur ladite portion supérieure (20) de la structure portante et est raccordée à un levier (8) au moyen de commande (7-7a-7b-7c).

3. Hélicoptère selon la revendication 2 **caractérisé par le fait que** la barre de torsion (17) est positionnée de manière réglable dans le sens avant-arrière sur la portion supérieure (20) de la structure portante, pour obtenir le centrage optimal de l'hélicoptère.

4. Hélicoptère selon la revendication 1 **caractérisé par** le fait d'avoir un contrôle de direction comprenant un tuyau central (30) raccordé au collecteur principal (3) d'admission et orienté vers l'arrière par rapport aux épaules du pilote, tuyau (30) équipé d'une branche en T (31) vers la droite et vers la gauche fermée aux deux extrémités par des soupapes à bille creuse (38-38a) qui peuvent être commandées alternativement pour créer un jet d'air sous pression vers la droite et vers la gauche.
